# EUROPÄISCHE PATENTSCHRIFT

(11) **EP 1 201 200 B1**
(45) Veröffentlichungstag und Bekanntmachung des Hinweises auf die Patenterteilung: **14.07.2004**
(21) Anmeldenummer: 00123704.9
(22) Anmeldetag: 31.10.2000
(51) Int. Cl.: A61C 8/00

(54) **Implantataggregat**
implant assembly
Système d'implant

(43) Veröffentlichungstag der Anmeldung: 02.05.2002
(73) Patentinhaber: Münster, Harry, 44869 Bochum (DE)
(72) Erfinder: Münster, Harry, 44869 Bochum (DE)
(74) Vertreter: Rohmann, Michael, Dr.

(56) Entgegenhaltungen:
- EP-A- 0 580 945
- FR-A- 2 766 354
- US-A- 5 178 539
- US-A- 5 516 288

## Beschreibung

Die Erfindung betrifft ein Implantataggregat, mit einem an einem Kieferknochen befestigbaren Implantat sowie zumindest einem an dem mundhöhlenseitigen Ende des Implantates befestigbaren Primärkörper, an welchem Primärkörper zumindest ein Zahnersatzelement fixierbar ist. - Bei dem Primärkörper handelt es sich beispielsweise um einen Primärzahnkörper und auf dem Primärzahnkörper ist eine Zahnkrone als Zahnersatzelement fixierbar.

US-A-5 516 288 und FR-A-2 766 354 beschreiben solche implantataggregate.

Bei einem aus der Praxis bekannten Implantataggregat wird zunächst das Implantat an dem Kieferknochen befestigt und hierzu zweckmäßigerweise in den Kieferknochen eingeschraubt. Anschließend wird auf einem im Wesentlichen ebenen mundhöhlenseitigen Ende des Implantates ein Zwischenstück befestigt, das in der Regel zylinderförmig ausgebildet ist. Auf diesem Zwischenstück wird dann ein zylinderförmiger Primärzahnkörper befestigt, wobei dieser Primärzahnkörper zweckmäßigerweise mit dem Zwischenstück und vorzugsweise mit dem Implantat verschraubt wird. Auf den Primärzahnkörper wird danach eine Zahnkrone aufgesetzt bzw. fixiert. Die bekannten Maßnahmen zur Verwirklichung des Implantataggregates sind verhältnismäßig aufwendig. Das bekannte Implantataggregat zeichnet sich insbesondere durch den Nachteil aus, dass der Primärzahnkörper nur schwierig in die gewünschte Endlage ausrichtbar ist. Die hiermit verbundenen Ausrichtmaßnahmen sind sehr aufwendig und oftmals ergeben sich dabei unerwünschte Ungenauigkeiten.

Demgegenüber liegt der Erfindung das technische Problem zugrunde, ein Implantataggregat der eingangs genannten Art anzugeben, welches auf einfache und wenig aufwendige Weise realisierbar ist und bei dem einfach und problemlos der Primärkörper ausgerichtet werden kann bzw. in die gewünschte Position überführt werden kann.

Zur Lösung dieses technischen Problems lehrt die Erfindung ein Implantataggregat der eingangs beschriebenen Art mit den Merkmalen des Anspruchs 1.

Die verschiedenen Elemente des erfindungsgemäßen Implantataggregates können unterschiedliche Größen aufweisen, die abhängig von den jeweiligen Bedingungen des zugeordneten Kiefers bzw. der zugeordneten Mundhöhle sind. Das erfindungsgemäße Implantataggregat eignet sich sowohl für den Oberkiefer als auch für den Unterkiefer. - Das Implantat des erfindungsgemäßen Implantataggregates ist nach bevorzugter Ausführungsform in den Kieferknochen einschraubbar. Insoweit handelt es sich hierbei vorzugsweise also um ein Schraubenimplantat.

Die Wölbung der Aufnahmeschale hat vorzugsweise die Form eines Kugelschalenabschnitts oder die Form eines Ellipsoidschalenabschnitts. Erfindungsgemäß weist der Primärkörper eine komplementäre Wölbung auf. Vorzugsweise hat die Wölbung des Primärkörpers die Form des unteren Abschnitts einer Eichel und ist hierzu die entsprechende Wölbung der Aufnahmeschale komplementär. Der Primärkörper wird mit seiner genannten Wölbung in die Wölbung der Aufnahmeschale eingesetzt. Nach sehr bevorzugter Ausführungsform der Erfindung findet hierbei ein vollflächiger Kontakt oder ein im Wesentlichen vollflächiger Kontakt zwischen der Wölbung des Primärkörpers und dem Inneren der Aufnahmeschale statt. Vollflächiger Kontakt meint dabei auch, dass zwischen der Aufnahmeschale und der Wölbung des Primärkörpers eine Befestigungssubstanz, insbesondere ein Klebematerial oder ein Zement zwischengeschaltet sein kann. Nach sehr bevorzugter Ausführungsform der Erfindung ist der Primärkörper jedenfalls formschlüssig in die Aufnahmeschale eingepasst. - Der Erfindung liegt die Erkenntnis zugrunde, dass aufgrund des erfindungsgemäßen Einfassens des Primärkörpers in die komplementär geformte und zum Kiefer hin gewölbte Aufnahmeschale durch Verschwenken des Primärkörpers in der Aufnahmeschale eine sehr funktionssichere und sehr präzise Ausrichtung des Primärkörpers möglich ist. Diese Ausrichtung ist auf sehr einfache, wenig aufwendige und problemlose Weise vor der endgültigen Befestigung des Primärkörpers in der Aufnahmeschale möglich. Die Ausrichtung wird bevorzugt gemäß der Gradzahl der Zahnachse eines natürlichen Zahnes vorgenommen. Vorzugsweise erfolgt die Ausrichtung mittels einer Schablone.

Eine Ausführungsform der Erfindung ist dadurch gekennzeichnet, dass der Primärkörper ein Primärzahnkörper ist und dass auf dem Primärzahnkörper eine Zahnkrone als Zahnersatzelement fixierbar ist. Der Primärzahnkörper besteht zweckmäßigerweise aus zumindest einem Material aus der Gruppe "Edelmetall, Nichtedelmetall, Keramik". Der Primärzahnkörper kann beispielsweise aus Gold oder aber auch aus Titan, Chrom oder Molybdän bestehen. Nach einer sehr bevorzugten Ausführungsform der Erfindung besteht der Primärzahnkörper aus Keramik. Es versteht sich, dass der Primärzahnkörper entsprechend den gewünschten Bedingungen unterschiedliche Größen aufweisen kann. Erfindungsgemäß weist der Primärzahnkörper an seinem aufnahmeschalenseitigen Ende eine Wölbung auf, mit der er in die komplementär gewölbte Aufnahmeschale eingepasst wird. Wenn der Primärzahnkörper für den Seitenzahnbereich vorgesehen ist, hat der gesamte Primärzahnkörper zweckmäßigerweise die Form einer Eichel. Wenn der Primärzahnkörper für den Frontzahnbereich vorgesehen ist, hat dagegen der Primärzahnkörper vorzugsweise an der aufnahmeschaleabgewandten Seite eine Schaufelform. Auf dem Primärzahnkörper wird letztendlich eine Zahnkrone aufgesetzt und befestigt.

Eine andere Ausführungsform der Erfindung ist dadurch gekennzeichnet, dass der Primärkörper ein Halteelement für eine Zahnprothese ist und dass die Zahnprothese als Zahnersatzelement an dem Halteelement fixierbar ist. Bei dem Halteelement mag es sich um ein Ankerelement oder ein Teleskopelement handeln. Zweckmäßigerweise wird die Zahnprothese mit dem Halteelement über eine Rastverbindung verbunden.

Nach sehr bevorzugter Ausführungsform, der im Rahmen der Erfindung ganz besondere Bedeutung zukommt, wird die Aufnahmeschale durch ein Schalenelement gebildet, welches Schalenelement an dem Implantat befestigbar ist. Es liegt im Rahmen der Erfindung, dass das Schalenelement ein kugelschalenabschnittsförmiges Teil oder ein im Wesentlichen kugelschalenabschnittsförmiges Teil oder ein ellipsoidschalenabschnittsförmiges Teil oder im Wesentlichen ellipsoidschalenabschnittsförmiges Teil aufweist. Die Wölbung ist dabei zum kieferseitigen Teil des Implantates hin gerichtet. In Abhängigkeit von der Stärke des Zahnfleisches und der Zahnschleimhaut kann das erfindungsgemäße Schalenelement in unterschiedlichen Größen ausgeführt sein. Die Aufnahmeschale des Schalenelementes besteht vorzugsweise aus zumindest einem Material der Gruppe "Edelmetall, Nichtedelmetall, Keramik". Die Aufnahmeschale des Schalenelementes kann beispielsweise aus Gold oder Titan bestehen. Nach sehr bevorzugter Ausführungsform der Erfindung besteht die Aufnahmeschale des Schalenelementes aus Keramik. Zweckmäßigerweise wird das Schalenelement an dem Implantat festgeschraubt bzw. in das Implantat eingeschraubt. Es liegt jedoch auch im Rahmen der Erfindung, dass das Schalenelement an dem Implantat angeklebt wird. Zweckmäßigerweise weist das Schalenelement dann ein Verlängerungselement auf, das in das Implantat eingreifen kann und welches mit dem Implantat verklebt wird.

Nach sehr bevorzugter Ausführungsform, der im Rahmen der Erfindung ganz besondere Bedeutung zukommt, ist der Primärkörper in die Aufnahmeschale eingeklebt. Es liegt dabei im Rahmen der Erfindung, dass der Primärkörper in das die Aufnahmeschale bildende und oben erläuterte Schalenelement eingeklebt wird. Zweckmäßigerweise wird der Primärkörper formschlüssig in die Aufnahmeschale eingeklebt. Das Einkleben des Primärkörpers kann mit einem geeignetem Klebstoff erfolgen. Nach einer Ausführungsform der Erfindung wird der Primärkörper mittels eines Zementes in die Aufnahmeschale eingeklebt. Vorzugsweise wird dabei ein Kompositzement eingesetzt. Es liegt im Rahmen der Erfindung, dass der zum Einkleben des Primärkörpers eingesetzte Zement polymerisierbare Monomere enthält, die bei der Härtung des Zementes polymerisieren. Vorzugsweise findet die Härtung des erfindungsgemäß verwendeten Klebstoffes und/oder Zementes als Lichthärtung statt. Nach bevorzugter Ausführungsform der Erfindung wird dem erfindungsgemäß eingesetzten Klebstoff und/oder Zement zumindest ein Haftvermittler zugesetzt. - Der Erfindung liegt die Erkenntnis zugrunde, dass ein Einkleben des Primärkörpers in die Aufnahmeschale mit ganz besonderen Vorteilen verbunden ist. Diese erfindungsgemäße Ausführungsform hat sich besonders bewährt. Durch Einsetzen des Primärkörpers in die Aufnahmeschale unter Zwischenschaltung eines Klebstoffes und/oder Zementes kann der Primärkörper vor Aushärtung des Klebstoffes und/oder Zementes sehr funktionssicher und exakt durch Verschwenken in der Aufnahmeschale in seine gewünschte Position bzw. Ausrichtung überführt werden. Nichtsdestoweniger gewährleistet die klebende Verbindung zwischen der Aufnahmeschale und dem Primärkörper einen überraschend festen Halt des Primärkörpers. Außerdem kann die Klebeverbindung federnde Funktionen übernehmen und somit auch zum Toleranzausgleich dienen. Durch die vorzugsweise flächige Verklebung von Aufnahmeschale und Primärkörper wird weiterhin sehr wirksame Abdichtung erzielt und somit insbesondere ein effektiver Schutz vor Bakterien verwirklicht.

Nachfolgend wird die Erfindung anhand einer lediglich ein Ausführungsbeispiel darstellenden Zeichnung näher erläutert. Es zeigen in schematischer Darstellung:
- Fig. 1: einen Längsschnitt durch ein erfindungsgemäßes Implantataggregat in einer ersten Ausführungsform und
- Fig. 2: den Gegenstand gemäß Fig. 1 in einer weiteren Ausführungsform.

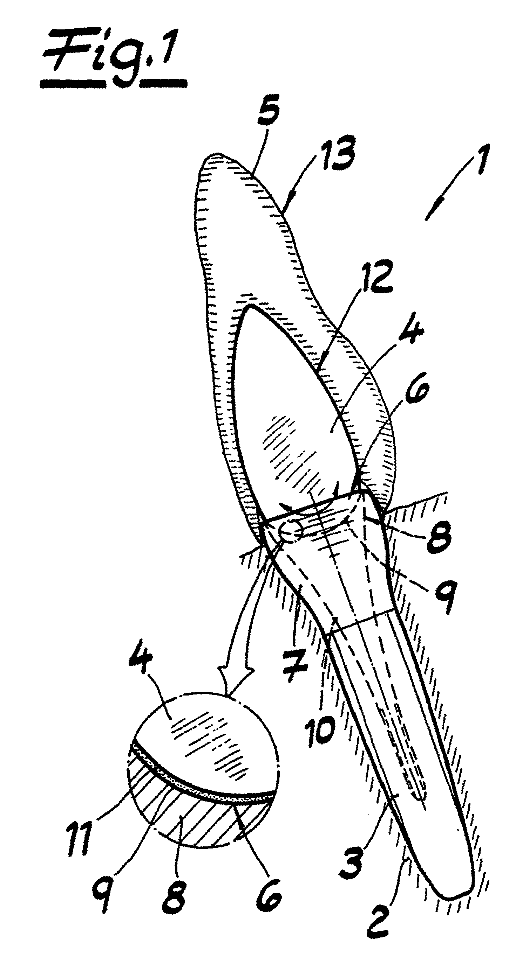

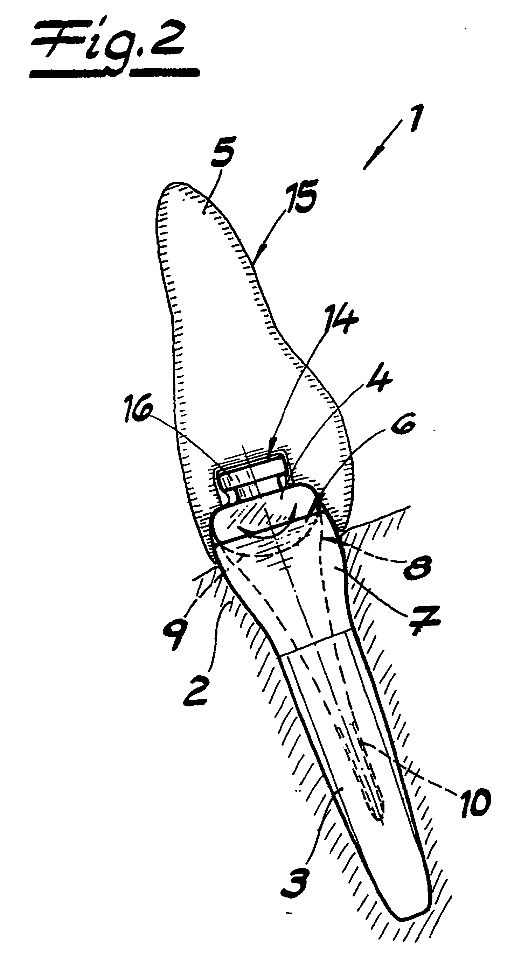

Die Figuren zeigen ein erfindungsgemäßes Implantataggregat 1, mit einem an einem nur angedeuteten Kieferknochen 2 befestigbaren Implantat 3. Vorzugsweise und im Ausführungsbeispiel ist das Implantat 3 in den Kieferknochen 2 einschraubbar. Insoweit handelt es sich um ein sogenanntes Schraubenimplantat. An dem mundhöhlenseitigen Ende des Implantates 3 ist ein Primärkörper 4 befestigt und an dem Primärkörper 4 ist ein Zahnersatzelement 5 fixiert. Erfindungsgemäß weist das Implantat 3 an seinem mundhöhlenseitigen Ende eine Aufnahmeschale 6 für den Primärkörper 4 auf. Die Aufnahmeschale 6 ist zum kieferseitigen Teil 7 hin gewölbt ausgebildet. Vorzugsweise und im Ausführungsbeispiel entspricht diese Wölbung der Aufnahmeschale 6 einem Ellipsoidmantelabschnitt. Der Primärkörper 4 weist an seinem aufnahmeschalenseitigen Ende eine zu der Wölbung der Aufnahmeschale 6 komplementäre Wölbung auf. Vorzugsweise und im Ausführungsbeispiel entspricht auch die Wölbung dieses Primärkörpers 4 einem Ellipsoidmantelabschnitt. Die Wölbung des Primärkörpers 4 entspricht nach einer Ausführungsform dem unteren Abschnitt einer Eichel. Vorzugsweise und im Ausführungsbeispiel ist die genannte Wölbung des Primärkörpers 4 formschlüssig in die Wölbung der Aufnahmeschale 6 eingepasst. Nach sehr bevorzugter Ausführungsform und im Ausführungsbeispiel nach den Fig. 1 und 2 wird die Aufnahmeschale 6 durch ein Schalenelement 8 gebildet, welches Schalenelement 8 an dem Implantat 3 befestigt ist. Im Ausführungsbeispiel wird die Aufnahmeschale 6 durch ein ellipsoidmantelförmiges Teil 9 des Schalenelementes 8 gebildet, das in einen entsprechend gewölbten Abschnitt am mundhöhlenseitigen Ende des Implantates 3 formschlüssig eingepasst ist. Das Schalenelement 8 weist fernerhin ein an das ellipsoidmantelförmige Teil 9 angeschlossenes Schraubelement 10 auf, welches Schraubelement 10 in das Implantat 3 eingeschraubt ist. Es ist auch möglich, einen an das ellipsoidmantelförmige Teil 9 angeschlossenen Stift vorzusehen, der in das Implantat 3 eingeklebt wird. Auch das Schraubelement 10 kann neben der Verschraubung mit dem Implantat 3 auch zusätzlich in das Implantat 3 eingeklebt sein.

Nach sehr bevorzugter Ausführungsform, der im Rahmen der Erfindung ganz besondere Bedeutung zukommt, ist der Primärkörper 4 in die Aufnahmeschale 6, vorzugsweise in das Schalenelement 8 eingeklebt. Vorzugsweise und im Ausführungsbeispiel erfolgt die Verklebung von Primärkörper 4 und Aufnahmeschale 6 mit Hilfe eines Zementes 11. Die Verklebung wird zweckmäßigerweise und im Ausführungsbeispiel vollflächig zwischen dem Primärkörper 4 und der Aufnahmeschale 6 eingerichtet. Vor der Aushärtung des Zementes 11 kann der Primärkörper 4 erfindungsgemäß sehr wirksam und exakt durch Verschwenkung in der Aufnahmeschale 6 ausgerichtet werden. Dies wurde in den Fig. 1 und 2 durch einen Doppelpfeil angedeutet. Es versteht sich, dass mehrere Freiheitsgrade bezüglich der Verschwenkung des Primärkörpers 4 in der Aufnahmeschale 6 möglich sind.

Im Ausführungsbeispiel nach Fig. 1 ist der Primärkörper 4 ein Primärzahnkörper 12 und auf diesem Primärzahnkörper 12 ist eine Zahnkrone 13 als Zahnersatzelement 5 fixiert. Der Primärzahnkörper 12 weist im Ausführungsbeispiel nach Fig. 1 in etwa die Form einer Eichel auf.

Im Ausführungsbeispiel nach Fig. 2 ist der Primärkörper 4 ein Halteelement 14 für eine Zahnprothese 15. Das Halteelement 14 weist die beschriebene zu der Aufnahmeschale 6 komplementäre Wölbung auf und ist zahnprothesenseitig mit einem Formschlusselement 16 versehen. In Fig. 2 bildet die Zahnprothese 15 das Zahnersatzelement 5 und ist an dem Halteelement 14 fixierbar bzw. durch Verrastung mit dem Formschlusselement 16 an dem Halteelement 14 befestigbar.

## Patentansprüche

1. Implantataggregat (1), mit einem an einem Kieferknochen (2) befestigbaren Implantat (3) sowie zumindest einem an dem mundhöhlenseitigen Ende des Implantates (3) befestigbaren Primärkörper (4), an welchem Primärkörper (4) zumindest ein Zahnersatzelement (5) fixierbar ist,
wobei das Implantat (3) an seinem mundhöhlenseitigen Ende eine Aufnahmeschale (6) für den Primärkörper (4) aufweist,
wobei der Primärkörper (4) an seiner aufnahmeschalenseitigen Unterseite die Form eines Kugelschalenabschnittes oder die Form eines Ellipsoidschalenabschnittes aufweist,
wobei die Aufnahmeschale eine zu der Form der Unterseite des Primärkörpers komplementäre Form aufweist und dementsprechend zum kieferseitigen Teil des Implantates (3) hin gewölbt ausgebildet ist
und wobei die Unterseite des Primärkorpers lediglich über eine Klebeverbindung unter Zwischenschaltung einer flächigen Kleber- und/oder Zementschicht und ansonsten verbindungselementfrei vollflächig mit der Aufnahmeschale (6) verbunden werden kann.

2. Implantataggregat nach Anspruch 1, **dadurch gekennzeichnet, dass** das Implantat (3) in den Kieferknochen (2) einschraubbar ist.

3. Implantataggregat nach einem der Ansprüche 1 bis 2, **dadurch gekennzeichnet, dass** der Primärkörper (4) ein Primärzahnkörper (12) ist und dass auf dem Primärzahnkörper (12) eine Zahnkrone (13) als Zahnersatzelement (5) fixierbar ist.

4. Implantataggregat nach einem der Ansprüche 1 oder 2, **dadurch gekennzeichnet, dass** der Primärkörper (4) ein Halteelement (14) für eine Zahnprothese (15) ist und dass die Zahnprothese (15) als Zahnersatzelement (5) an dem Halteelement (14) fixierbar ist.

5. Implantataggregat nach einem der Ansprüche 1 bis 4, **dadurch gekennzeichnet, dass** die Aufnahmeschale (6) durch ein Schalenelement (8) gebildet wird, welches Schalenelement (8) an dem Implantat (3) befestigbar ist.

## Claims

1. An implanting unit (1) including an implant (3) that is attachable to a jawbone (2) and at least one primary element (4) that is attachable to the oral cavity end of the implant (3), to which primary element (4) at least one tooth replacement element (5) is fixable,
wherein the implant (3) has a seating cup (6) at its oral cavity end for primary element (4),
wherein the underside of primary element (4) for engaging with the seating cup has a hemispherical or hemi-elliptical shape,
wherein the seating cup has a shape that complements the shape of the underside of primary element (4) and is correspondingly conformed with a bulging towards the jaw-side portion of the implant (3)
and wherein the underside of primary element (4) can only be connected with full contact with the seating up (6) by use of a bonding compound and by interposing a flat bonding and/or cement layer but otherwise without any bonding agent.

2. The implanting unit according to claim 1, **characterised in that** the implant (3) can be screwed into the jawbone (2).

3. The implanting unit according to either of claims 1 or 2, **characterised in that** the primary element (4) is a primary tooth body (12) and that a crown (13) is fixable on the primary tooth body (4) as a replacement tooth element (5).

4. The implanting unit according to either of claims 1 or 2, **characterised in that** the primary element (4) is a retaining element (14) for a false tooth (15) and that the false tooth (15) is fixable on the retaining element (14) as a replacement tooth element (5).

5. The implanting unit according to any of claims 1 to 4, **characterised in that** the seating cup (6) is formed a cup element (8), which cup element (8) is attachable to the implant (3).

## Revendications

1. Agrégat d'implant (1) comportant un implant (3) pouvant être fixé sur un os maxillaire (2) ainsi qu'au moins un corps primaire (4) pouvant être fixé à l'extrémité située du côté de la cavité buccale de l'implant (3), corps primaire (4) sur lequel peut être fixé au moins un appareil dentaire (5),
l'implant (3) présentant, à son extrémité située du côté de la cavité buccale, une coque réceptrice (6) pour le corps primaire (4),
le corps primaire (4) présentant, sur sa face inférieure située du côté de la coque réceptrice, la forme d'une section de coque sphérique ou la forme d'une section de coque de type ellipsoïde,
la coque réceptrice présentant une forme complémentaire à la forme de la face inférieure du corps primaire et étant réalisée bombée en conséquence en direction de la partie de l'implant (3) située du côté de la mâchoire
et la face inférieure du corps primaire pouvant être reliée sur toute sa surface simplement par un assemblage collé avec interposition d'une couche de colle et/ou de cément plane et autrement sans aucun élément de liaison à la coque réceptrice (6).

2. Agrégat d'implant selon la revendication 1, **caractérisé en ce que** l'implant (3) peut être vissé dans l'os maxillaire (2).

3. Agrégat d'implant selon l'une quelconque des revendications 1 à 2, **caractérisé en ce que** le corps primaire (4) est un corps primaire de dent (12) et qu'une couronne dentaire (13) peut être disposée en tant qu'appareil dentaire (5) sur le corps primaire de dent (12).

4. Agrégat d'implant selon l'une quelconque des revendications 1 ou 2, **caractérisé en ce que** le corps primaire (4) est un élément de retenue (14) pour une prothèse dentaire (15) et que la prothèse dentaire (15) peut être fixée en tant qu'appareil dentaire (5) sur l'élément de retenue (14).

5. Agrégat d'implant selon l'une quelconque des revendications 1 à 4, **caractérisé en ce que** la coque réceptrice (6) est constituée par un élément en forme de coque (8) , lequel élément en forme de coque (8) peut être fixé sur l'implant (3).
